(19) Europäisches Patentamt
European Patent Office
Office européen des brevets

(11) EP 0 898 582 B1

(12) EUROPEAN PATENT SPECIFICATION

(45) Date of publication and mention of the grant of the patent:
**02.05.2003 Bulletin 2003/18**

(21) Application number: **97924013.2**

(22) Date of filing: **15.05.1997**

(51) Int Cl.[7]: **C08C 2/04**, C08F 6/08

(86) International application number:
**PCT/EP97/02704**

(87) International publication number:
**WO 97/043318 (20.11.1997 Gazette 1997/50)**

# (54) IONIC CONTAMINANTS REMOVAL FROM POLYMER CEMENTS USING A MOLTEN COMPONENT

ENTFERNUNG IONISCHER VERUNREINIGUNGEN AUS POLYMERLÖSUNGEN MIT EINER SCHMELZE

ELIMINATION DE CONTAMINANTS IONIQUES PRESENTS DANS DES POLYMERES-CIMENTS A L'AIDE D'UN COMPOSANT EN FUSION

(84) Designated Contracting States:
**BE DE ES FR GB IT NL**

(30) Priority: **16.05.1996 US 648948**
**16.05.1996 US 648947**

(43) Date of publication of application:
**03.03.1999 Bulletin 1999/09**

(73) Proprietor: **SHELL INTERNATIONALE RESEARCH MAATSCHAPPIJ B.V.**
**2596 HR Den Haag (NL)**

(72) Inventors:
- **MALVEN, William, Charles**
  **Houston, TX 77043 (US)**
- **POTTER, Michael, Wayne**
  **Sugar Land, TX 77478 (US)**
- **VEITH, Cary, Alan**
  **Houston, TX 77094 (US)**

(56) References cited:
**DE-A- 3 520 103**
**GB-A- 776 682**
**US-A- 2 787 647**
**US-A- 2 999 891**
**US-A- 5 177 297**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 898 582 B1

## Description

The present invention relates to a process for removing ionic contaminants from polymer coments.

Many polymerisation operations utilize a metal catalyst. In some instances where the productivity is extremely high or where the end use does not require pure polymer, the metal can simply be left in the composition. However, in many instances the metal must be removed before the polymer can be utilized.

Filtration has long been known as a method of removing insoluble metal contaminants. However, filtration of viscous polymer solutions is generally slow and expensive. It is well known to extract metal with aqueous solutions of acids or chelates. This approach is frequently unsatisfactory because of emulsion formation, requirements of extended setting times, or the saturation of the organic phase with water. Also polymers, particularly elastomers, have limits on how harshly they can be treated without decomposing. Examples of the discussed methods may be found in US Patent Nos. 2,787,647, 2,999,891 and 5,177,391; in UK Patent Application No.776,682 and in German patent Application No. 3,520,103.

It is an object of the present invention to provide a process for removing ionic contaminants from polymer cements.

Accordingly, the present invention provides a process for removing ionic contaminants from a polymer cement containing ionic contaminants comprising

i) contacting the polymer cement with a molten component which is a salt or salt hydrate capable of reacting with the ionic contaminants; and
ii) separating the molten component from the polymer cement so obtained.

In this way emulsion formation can advantageously be avoided.

In Figure 1 a flow diagram is shown of a polymerisation process including initiator removal followed by hydrogenation and polymer cement recovery; and in Figure 2 a flow diagram is shown of an alternative embodiment of the present invention wherein polymer is produced, hydrogenated and thereafter metal contaminants are removed.

In accordance with the present invention it has been found that the use of a molten component such as a bisulphate salt for removing ionic contaminants such as lithium catalyst residue from polymer solutions avoids emulsion formation. This has the further benefit of allowing easier separation after the treatment is complete since the molten phase is substantially more dense than the organic phase. Further, rather than having to accept a trade-off in effectiveness in order to avoid the introduction of large amounts of water, the molten system has more capacity to remove contaminants than an aqueous composition has.

The molten component can be any salt or a salt hydrate which is liquid under the conditions employed for the ionic contaminants removal and which is capable of reacting with the contaminants without significantly harming the polymer. Acid salts, and eutectic mixtures of salts are suitable. Initiator removal from lithium catalysed elastomers can suitably be carried out at a temperature in the range of from 30 to 150°C, preferably at a temperature in the range of from 50 to 80°C, and more preferably at a temperature in the range of from 60 to 70°C. Thus, sodium bisulphate monohydrate which melts at 58.5°C is ideally suited for such a reaction because of its melting point and its ability to provide a melting point and its ability to provide a source of acidic protons. Salts such as mono basic sodium phosphate dihydrate (sodium dihydrogenphosphate dihydrate), sodium orthophosphite pentahydrate, sodium acid phosphite pentahydrate, and sodium sulphate decahydrate can also be used but are less desirable because of larger amounts of water of hydration.

In accordance with the present invention undesirable ionic contaminants can be removed from any polymer cement whether a true solution or a dispersion of polymer in a liquid diluent. The ionic contaminants may be the same type of ionic contaminant or they may be different types of ionic contaminants. Generally, the present process is utilized to remove metal ions from solutions of polymer in organic solvents or in the monomer utilized in preparing the polymer.

The impurities removed are normally metallic ions from a polymerisation catalyst or from catalyst used for subsequent treatment such as hydrogenation, although the invention is applicable to the removal of any other undesirable ions, especially cations, including components such as ammonium ions. Thus, the metal ions which can be removed from the polymer cement in accordance with the present invention include lithium, nickel and aluminium ions. In instances where metal may be present in metallic form, i.e. zero valent metal, the composition can be subjected to an oxidation treatment to convert the metal to a metal ion.

There must be sufficient contact between the molten component and the ionic contaminant being removed to ensure that a chemical reaction can take place. Presumably the removal proceeds by ion exchange as shown by the following exemplary equation wherein an excess of sodium bisulphate monohydrate is in contact with a solution of elastomer prepared using a dilithium initiator followed by ethylene oxide to terminate the reaction and introduce an oxygen at each end between the lithium and the polymer chain.

$$2NaHSO_4 \cdot H_2O(l)_{xs} + Li\text{-}O\sim O\text{-}Li$$

$$\rightarrow 2NaLiSO_4 + HO\sim OH + xsNaHSO_4 \cdot H_2O$$

As noted above in the case of contaminants in the metallic state such as nickel remaining from a hydrogenation reaction, oxidation may be required prior to extraction as depicted below.

$$Ni^{\circ} + H_2O + 1/2O_2 \rightarrow Ni^{+2} + 2OH^-$$

$$\text{then } 2NaHSO_4 \cdot H_2O + Ni^{+2} + 2OH^-$$

$$\rightarrow Na_2Ni(SO_4)_2 + 2H_2O.$$

After the ion exchange, or neutralization of the lithium alkoxide with the sodium bisulphate monohydrate or other suitable molten salt, the resulting sodium lithium sulphate can be dissolved in the molten excess sodium bisulphate monohydrate. The molten salt, being more dense than the organic phase allows rapid phase separation and avoids the emulsion problems which would be encountered if an aqueous extraction system were utilized.

The process can suitably be carried out on either a continuous or batch basis with contact time as little as 1 minute or as much as 24 hours. Preferably, the contact time is in the range of from 5 minutes to 5 hours, more preferably in the range of from 10 minutes to 2.5 hours.

The contacting can be carried out by stirring, shaking or tumbling using static mixers, mixer-settlers, centrifugal contactor or other conventional devices. A continuous process can be used whereby the two phases are passed cocurrently or countercurrently, for instance through a column equipped with rotating paddles.

Whether a continous or batch process is used at the conclusion of the reaction, the material is simply allowed to settle which occurs very quickly because of the density of the molten phase. At this point, the two phases may be separated by any conventional means such as decantation or draining off of the lower phase in either a batch or continuous mode. Preferably the separation is effected by decantation using a sightglass or conductivity probe to detect the interface.

The molten component will normally be used in an excess relative to that needed to react with the ionic contaminants so as to provide a more dense continuous liquid phase to contain the removed material. Thus, the ratio of molten component to impurities can be in the range of from 2:1 to 200:1 based on equivalents, which in the case of sodium hydrogen sulphate monohydrate to remove lithium ions is the same thing as being based on moles. Preferably, an equivalent ratio in the range of from 2:1 to 100:1 would be utilized. More preferably, an equivalent ratio in the range of from 2:1 to 30:1. Actually, the upper limit is set only by economic conditions since anything more than 200:1 would offer little extraction advantage and would be more expensive.

Polymers produced by alkali metal initiated polymerisations are sometimes used without any further treatment prior to recovery from the reaction mixture. Frequently, however, a polymer with reduced aliphatic unsaturation is desired which necessitates a hydrogenation step. This is preferably carried out prior to polymer recovery and utilizes a catalyst which can add additional metals to the reaction composition. In some instances it is believed that the removal of alkali metal from a polymer solution generated by anionic polymerisation, prior to its hydrogenation, is beneficial. Accordingly, this invention can be utilized to remove metal contaminants such as lithium ions immediately after the polymerisation followed by separation of the phase containing the removed ionic contaminants and either direct recovery of the polymer or hydrogenation of the polymer prior to recovery. Particularly with dilithium-initiated polymerisations where it is desired that the ultimate product be hydrogenated it is desirable to utilize the present invention to remove the lithium ions prior to hydrogenation. Hydrogenation techniques are for instance set out in U.S. 3,700,633 and U.S. 4,970,254.

Alternatively, it is possible to carry out the hydrogenation in the presence of alkali metal initiator and thereafter remove both the alkali metal initiator and the hydrogenation catalyst cations.

It is sometimes desirable to incorporate functional groups at the ends of polymer chains, particularly elastomeric polymer chains. This can be done with dilithium initiators simply by adding a terminating agent such as ethylene oxide which gives terminal lithium-oxygen structures at each end of the polymer. However, such polymers tend to form gels. Polymers formed from monolithium initiators can be terminated with ethylene oxide to give a OLi structure at one end which can be utilized for incorporating a functional group, but this leaves the other end without a functional group. Recently, a technique has been developed to provide functional groups at each end, utilizing what is called a protected functional initiator (PFI). Such techniques are described in U.S. 5,416,168, and WO 91/12277. These processes utilize an initiator having the structure R"OR'Li where R" is a protecting group, i.e. $R_3Si0R'Li$ where the R groups are alkyl or

a pair of alkyl groups and hydrogen and R' is an alkylene group. After the polymerisation is complete, termination with ethylene oxide results in the conventional LiO-polymer structure at one end and results in no change at the other end, since it is protected by the protecting group. Thereafter the protecting silyl group can be removed by a technique called "deprotection". It has been found in accordance with the present invention that in such protected functional initiator systems the employment of the molten component results in "deprotection" and removal of the undesirable metal contaminants. This overall process can be exemplified as follows where the precursor to the protected functional initiator is produced from trimethylsilyl chloride and 3-chloro-2,2-dimethylpropanol. This product is reacted with lithium to give the initiator. Polymer is then formed from a monomer such as 1,3-butadiene and the reaction terminated with ethylene oxide. A molten component is then utilized in accordance with this invention to "deprotect" thus removing the organosilyl group from one end and removing the lithium from the other.

This can be viewed broadly as follows:

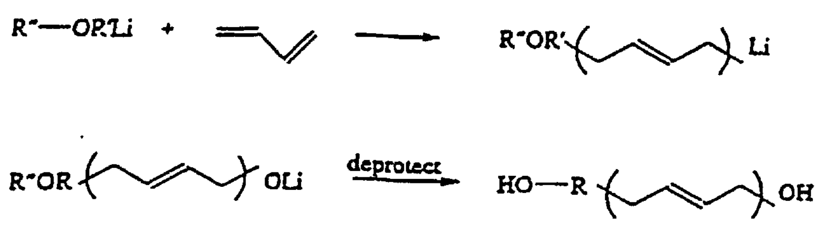


This can be viewed more specifically as follows:

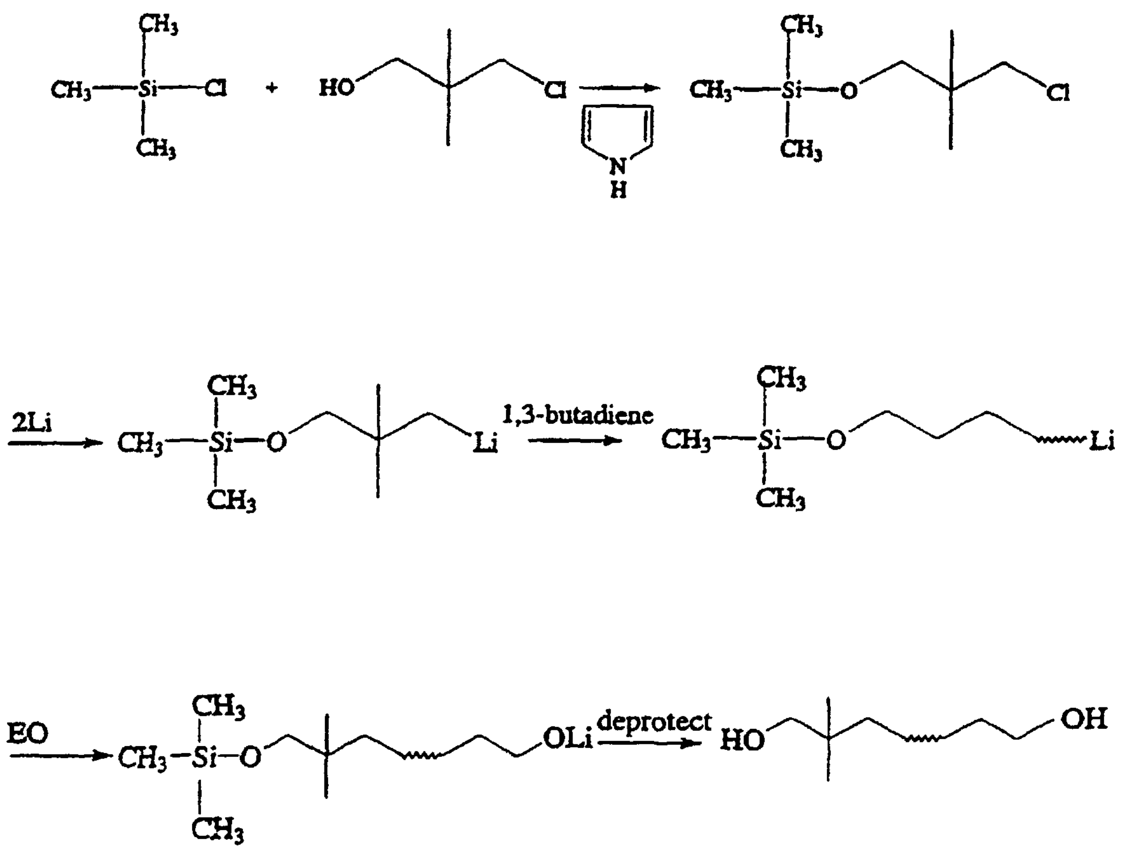


The polymer present in the polymer cement is suitably made by polymerising a monomer selected from the group consisting of conjugated dienes, monovinylaromatic hydrocarbons or mixtures thereof with a protected functional

initiator as described hereinbefore. By polymer cement is meant polymer dissolved in a solvent which can be the monomer or other suitable solvent. Suitably, the polymer is selected from the group consisting of polybutadiene, polyisoprene, butadiene-isoprene copolymers, butadiene-styrene copolymers and isoprene-styrene copolymers. Preferably, the polymer comprises a block copolymer composition comprising at least one poly(monovinyl-aromatic hydrocarbon) block and at least one poly(conjugated diene) block.

In Figure 1 there is shown, for illustrative purposes, one embodiment of the present invention wherein monomer, solvent and catalyst are introduced via feed line 10 into a reaction zone formed by reactor 12. The reaction mixture is stirred by means of a blade 14 which is rotated by shaft 16. Polymer cement comprising lithium terminated polymer and solvent are withdrawn by a first transfer line 18 and introduced into a lithium removal zone formed by contact vessel 20, contents of which are mixed by agitator means 22 which is similar to shaft 16 and blade 14. Molten sodium bisulphate monohydrate is transferred from a storage zone formed by storage vessel 24 to contactor vessel 20 via a second transfer line 26. The sodium bisulphate monohydrate is heated to a molten condition in vessel 24 by conventional heating means not shown. A heavier lower phase of excess sodium bisulphate monohydrate containing sodium lithium sulphate as a result of removal of lithium from the polymer cement is withdrawn from a contactor vessel 20 via lithium containing salt removal line 28. A portion of partly spent used salt can be recovered via first recovery line 30 controlled by valve 31 while the salt necessary for Ni and AC removal is transferred via third transfer line 32 to a hydrogenation catalyst removal zone formed by catalyst removal vessel 34. If desired, excess molten salt can be used so as to give a higher salt to polymer cement ratio in contact vessel 20. If this is done, the excess can be removed via line 35 controlled by valve 37 and recycled to storage vessel 24. The contents thereof are mixed by means of mixing means 36 which is similar to the shaft 16 and blade 14. This catalyst removal can be done by conventional means such as organic or unorganic acids but is preferably done by means of contact with additional molten material such as that used for the lithium removal, i.e., molten sodium bisulphate monohydrate. The sodium bisulphate monohydrate introduced as previously shown via line 32 can be reheated if necessary by means of conventional heating means not shown. The heavier molten excess sodium bisulphate monohydrate phase containing dissolved sulphates of lithium, nickel and aluminum is withdrawn via hydrogenation catalyst containing salt removal line 38 and finished polymer cement removed via product recovery line 40. If desired, catalyst removal vessel 34 can be operated using an excess of the molten salt so as to give a higher salt to polymer cement ratio. This excess is then withdrawn via line 42 controlled by valve 44 and recycled to storage vessel 24. The remaining partly spent salt is then recovered via line 46 controlled by valve 48. Make-up salt is introduced via make-up line 50. This can either be new salt or salt recovered via lines 30 and/or 46 which has been purified.

Since it is desirable in lithium initiated elastomer polymerisations to maintain essentially anhydrous conditions to avoid premature termination of the chains, and since water in the polymer cement is undesirable because of the potential for emulsion formation, it is preferred to maintain essentially anhydrous conditions throughout the system.

Accordingly, the polymer cement effluent from the lithium removal zone can optionally be transferred via fourth transfer line 49 to a drying zone defined by drying vessel 51 having an agitator means 53. Sodium bisulphate from a holding zone defined by holding vessel 47 is transferred via fifth transfer line 55 to drying vessel 51 where it absorbs any water thus producing sodium bisulphate monohydrate which is transferred via sixth transfer line 57 to storage vessel 24. Polymer cement either directly from contactor vessel 20 via line 59 controlled by valve 63 or from optional drying vessel 51 is introduced into a hydrogenation zone formed by hydrogenation vessel 52 via seventh transfer line 54 where it is contacted with a catalyst such as a conventional nickel aluminum hydrogenation catalyst and with hydrogen, all of which can be introduced via introduction means 56 which can be a single line or a multiple lines. After conventional contact with the hydrogenation catalyst to effect conventional hydrogenation, the thus hydrogenated polymer cement is withdrawn via hydrogenated polymer withdrawal line 58 and introduced into the hydrogenation catalyst removal vessel 34.

Alternatively, other water removal methods can be employed although this would give up the advantage of recycle to the Li removal step.

In Figure 2, it is shown that a polymer cement from reactor 12 is introduced into hydrogenation vessel 52 via line 60 which is equivalent to line 54 of Figure 1, it being understood that there is no initial lithium removal step as in Figure 1 and generally no drying step either since the effluent should be dry at this stage. Effluent from hydrogenation vessel 52 is removal via line 58 and introduced into a zone for combined catalyst removal and deprotection formed by deprotection vessel 61. Sodium bisulphate monohydrate is introduced from an alternative storage zone defined by alternative storage vessel 62 via eighth transfer line 64 into the deprotection vessel 61 where it is contacted with the polymer cement by means of agitator 66. A heavier molten phase of excess sodium bisulphate monohydrate containing both lithium from the deprotection and nickel and aluminum hydrogenation catalyst is withdrawn via metal containing salt removal line 68 and polymer cement is withdrawn via alternative product removal line 70. Deprotection vessel 61 can be operated with an excess of molten salt if desired so as to give a higher salt to polymer cement ratio in deprotection vessel 61. This excess is then withdrawn via line 68 and recycled to alternative storage vessel 62 via line 72 controlled by valve 74. Partially spent salt is removed via line 76 controlled by valve 78 for recycle, discard or purification.

Thus, in accordance with this embodiment of the present invention, α-ω-diol polymers are produced by the use of dilithium initiators or protected functional initiators. One family of PFIs produces hydroxy functionality in polymer molecules by hydrolysis of a protecting silanol group to produce the terminal alcohol. As shown in Figure 2, this embodiment of the invention makes possible the concurrent (1) hydrolysis of the protecting group to produce OH terminated polymer; (2) removal of metal incorporated during synthesis of the polymer (Li) and (3) removal of metals introduced during optional hydrogenation (Ni and Al).

The present invention will now be illustrated by means of the following Examples.

## EXAMPLES

### Example 1

**Removal of lithium from polymer cement before hydrogenation.**

A jacketed reaction kettle was first charged with 613 g of a 20% wt solution of a sec-butyllithium initiated, butadiene-based, mono-polymer in cyclohexane, and 68.7 g of sodium bisulfate monohydrate. The mixture was then stirred at 500 rpm with a paddle stirrer and heated to 65°C where the hydrated salt was molten. The mixture was stirred in this manner for 2 hours and then allowed to cool. The lithium content of the organic phase was reduced from 359 ppm to 7 ppm, and was easily hydrogenated to remove 97% of the unsaturation.

### Example 2

**Removal of lithium, nickel, and aluminum from polymer cement; with simultaneous production of hydroxide functionality by hydrolysis of a silanol protecting group**

In a similar manner, 410 g of 20% cyclohexane solution of a polymer produced by polymerising butadiene with a silicon-base protected functional initiator was placed in a jacketed kettle with 46.5 g sodium bisulfate monohydrate. The mixture was heated to 64C where the salt was molten and stirred while slowly bubbling a gas mixture of 5% oxygen in nitrogen through the solution. The levels of residual metals in the solution were reduced as shown:

| | Pre-treatment | Post-treatment |
|---|---|---|
| Li | 169 ppm | 5 ppm |
| Ni | 59 ppm | < 2 ppm |
| Al | 62 ppm | < 2 ppm |

Simultaneously the silicon-based protecting group had been completely hydrolysed as determined by proton NMR and HPLC.

### Example 3

**Removal of Li, Ni, and Al from a polymer cement by sodium dihydrogen phosphate dihydrate.**

600 g of a 20% solution of a polymer produced by polymerising butadiene with a silicon-based protected functional initiator was contacted with 60 g of sodium dihydrogen phosphate dihydrate and heated to 73°C where the salt was molten and stirred in like manner for 6 hours. Treatment with the phosphate salt produced substantial reductions in the level of residual metals as shown.

| | Pre-treatment | Post-treatment |
|---|---|---|
| Li | 390 ppm | 61 ppm |
| Ni | 181 ppm | 96 ppm |
| Al | 165 ppm | 86 ppm |

It will be clear from the above that in accordance with the present invention ionic contaminants can very attractively be removed from polymer cements.

## Claims

1. A process for removing ionic contaminants from a polymer cement containing ionic contaminants comprising

   i) contacting the polymer cement with a molten component which is a salt or a salt hydrate capable of reacting with the ion contaminants; and
   ii) separating the molten component from the polymer cement so obtained.

2. A process according to claim 1, wherein the ionic contaminants comprise lithium, nickel and aluminium ions.

3. A process according to claims 1 or 2, wherein the polymer is selected from the group consisting of polybutadiene, polyisoprene, butadiene-isoprene copolymers, butadiene-styrene copolymers and isoprene-styrene copolymers.

4. A process according to any one of claims 1 to 3, wherein the molten component is present in an amount to give a mole equivalent ratio of molten component to ionic contaminant in the-range of from 5:1 to 100:1.

5. A process according to any one of claims 1-4, wherein the polymer cement is contacted with the molten component at a temperature in the range of from 50 to 80 °C.

6. A process according to any one of claims 1 to 5, wherein the molten component is sodium bisulphate monohydrate, the ionic contaminant is lithium and wherein the mole equivalent ratio of the sodium bisulphate monohydrate to lithium is in the range of from 10:1 to 30:1.

7. A process according to any one of claims 1 to 6, wherein the contacting is carried out for a period of time in the range of from 5 minutes to 5 hours.

8. A process according to any one of claims 1 to 7, wherein the polymer cement comprises a lithium initiated polymer in cyclohexane solution which is contacted with molten sodium bisulphate monohydrate for a period of time in the range of from 10 minutes to 2.5 hours at a temperature within the range of from 50 to 80°C, whereafter by liquid-liquid phase separation an upper polymer phase having a reduced content of lithium as a result of ion exchange with the molten sodium bisulphate monohydrate is obtained.

## Patentansprüche

1. Verfahren zur Abtrennung ionischer Verunreinigungen aus einem ionische Verunreinigung enthaltenden Polymerzement, das die folgenden Stufen umfaßt:

   i) Inkontaktbringen des Polymerzementes mit einer geschmolzenen Komponente, die ein Salz oder ein Salzhydrat ist, das zur Reaktion mit den ionischen Verunreinigungen befähigt ist; und
   ii) Abtrennen der geschmolzenen Komponente aus dem so erhaltenen Polymerzement.

2. Verfahren nach Anspruch 1, worin die ionischen Verunreinigungen Lithium-, Nickel- und Aluminiumionen umfassen.

3. Verfahren nach Anspruch 1 oder 2, worin das Polymer aus der aus Polybutadien, Polyisopren, Butadien-Isoprencopolymeren, Butadien-Styrolcopolymeren und Isopren-Styrolcopolymeren bestehenden Gruppe ausgewählt wird.

4. Verfahren nach einem der Ansprüche 1 bis 3, worin die geschmolzene Komponente in einer Menge vorliegt, um ein Moläquivalentverhältnis von geschmolzener Komponente zu ionischer Verunreinigung im Bereich von 5:1 bis 100:1 zu ergeben.

5. Verfahren nach einem der Ansprüche 1 bis 4, worin der Polymerzement bei einer Temperatur im Bereich von 50 bis 80°C mit der geschmolzenen Komponente in Kontakt gebracht wird.

6. Verfahren nach einem der Ansprüche 1 bis 5, worin die geschmolzene Komponente Natriumbisulfatmonohydrat ist, die ionische Verunreinigung Lithium ist und worin das Moläquivalentverhältnis von Natriumbisulfatmonohydrat

zu Lithium im Bereich von 10:1 bis 30:1 liegt.

**7.** Verfahren nach einem der Ansprüche 1 bis 6, worin das Inberührungbringen während einer Zeitdauer im Bereich von 5 Minuten bis 5 Stunden ausgeführt wird.

**8.** Verfahren nach einem der Ansprüche 1 bis 7, worin der Polymerzement ein lithiuminitiiertes Polymer in Cyclohexanlösung umfaßt, der mit geschmolzenem Natriumbisulfatmonohydrat während einer Zeitdauer im Bereich von 10 Minuten bis 2,5 Stunden bei einer Temperatur im Bereich von 50 bis 80°C in Kontakt gebracht wird, wonach durch Flüssig-Flüssig-Phasentrennung eine obere Polymerphase mit einem verringerten Gehalt an Lithium als Ergebnis eines Ionenaustausches mit dem geschmolzenen Natriumbisulfatmonohydrat erhalten wird.

## Revendications

**1.** Procédé pour l'enlèvement de contaminants ioniques d'un ciment de polymère contenant des contaminants ioniques comprenant

i) la mise en contact du ciment de polymère avec un composant fondu qui est un sel ou un hydrate de sel pouvant réagir avec les contaminants ioniques; et
ii) la séparation du composant fondu du ciment de polymère ainsi obtenu.

**2.** Procédé suivant la revendication 1, dans lequel les contaminants ioniques comprennent des ions de lithium, de nickel et d'aluminium.

**3.** Procédé suivant l'une ou l'autre des revendications 1 et 2, dans lequel le polymère est choisi dans le groupe comprenant le polybutadiène, le polyisoprène, les copolymères de butadiène-isoprène, les copolymères de butadiène-styrène et les copolymères d'isoprène-styrène.

**4.** Procédé suivant l'une quelconque des revendications 1 à 3, dans lequel le composant fondu est présent en une quantité permettant de conférer un rapport d'équivalents molaires du composant fondu au contaminant ionique dans la plage de 5/1 à 100/1.

**5.** Procédé suivant l'une quelconque des revendications 1 à 4, dans lequel le ciment de polymère est mis en contact avec le composant fondu à une température dans l'intervalle de 50 à 80°C.

**6.** Procédé suivant l'une quelconque des revendications 1 à 5, dans lequel le composant fondu est du monohydrate de bisulfate de sodium, le contaminant ionique est du lithium et dans lequel le rapport d'équivalents molaires du monohydrate de bisulfate de sodium au lithium se situe dans la plage de 10/1 à 30/1.

**7.** Procédé suivant l'une quelconque des revendications 1 à 6, dans lequel la mise en contact est réalisée pendant une période de temps allant de 5 minutes à 5 heures.

**8.** Procédé suivant l'une quelconque des revendications 1 à 7, dans lequel le ciment de polymère comprend un polymère initié au lithium en solution dans du cyclohexane qui est mis en contact avec du monohydrate de bisulfate de sodium fondu pendant une période de temps allant de 10 minutes à 2,5 heures à une température allant de 50 à 80°C, après quoi, par une séparation de phase liquide-liquide, on obtient une phase de polymère supérieure ayant une teneur réduite en lithium à la suite d'un échange d'ions avec le monohydrate de bisulfate de sodium fondu.

FIG. 1

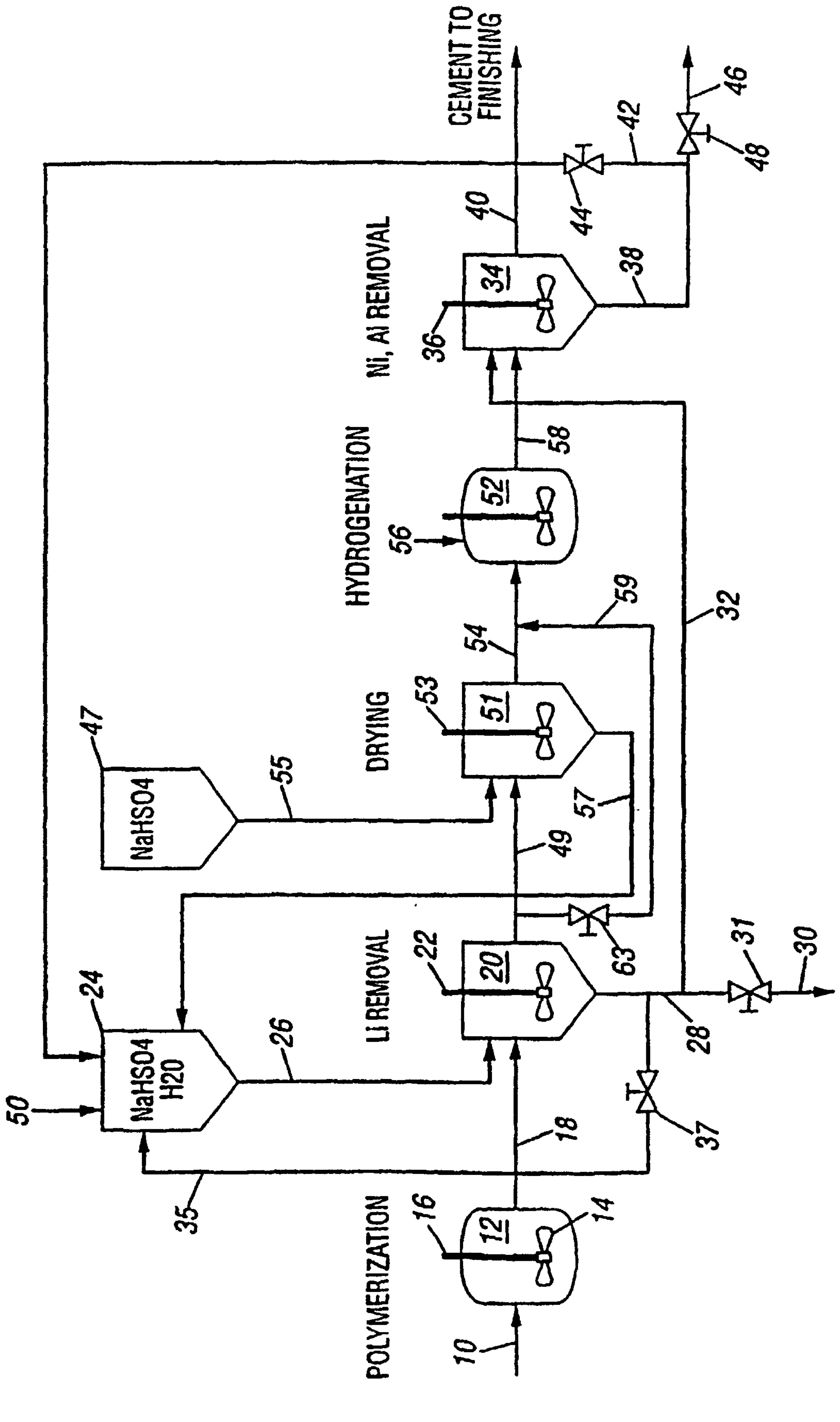
CEMENT TO FINISHING
POLYMERIZATION
Li REMOVAL
DRYING
HYDROGENATION
Ni, Al REMOVAL
NaHSO4 H20
NaHSO4
10
12
14
16
18
20
22
24
26
28
30
31
32
34
35
36
37
38
40
42
44
46
47
48
49
50
51
52
53
54
55
56
57
58
59
63

FIG. 2

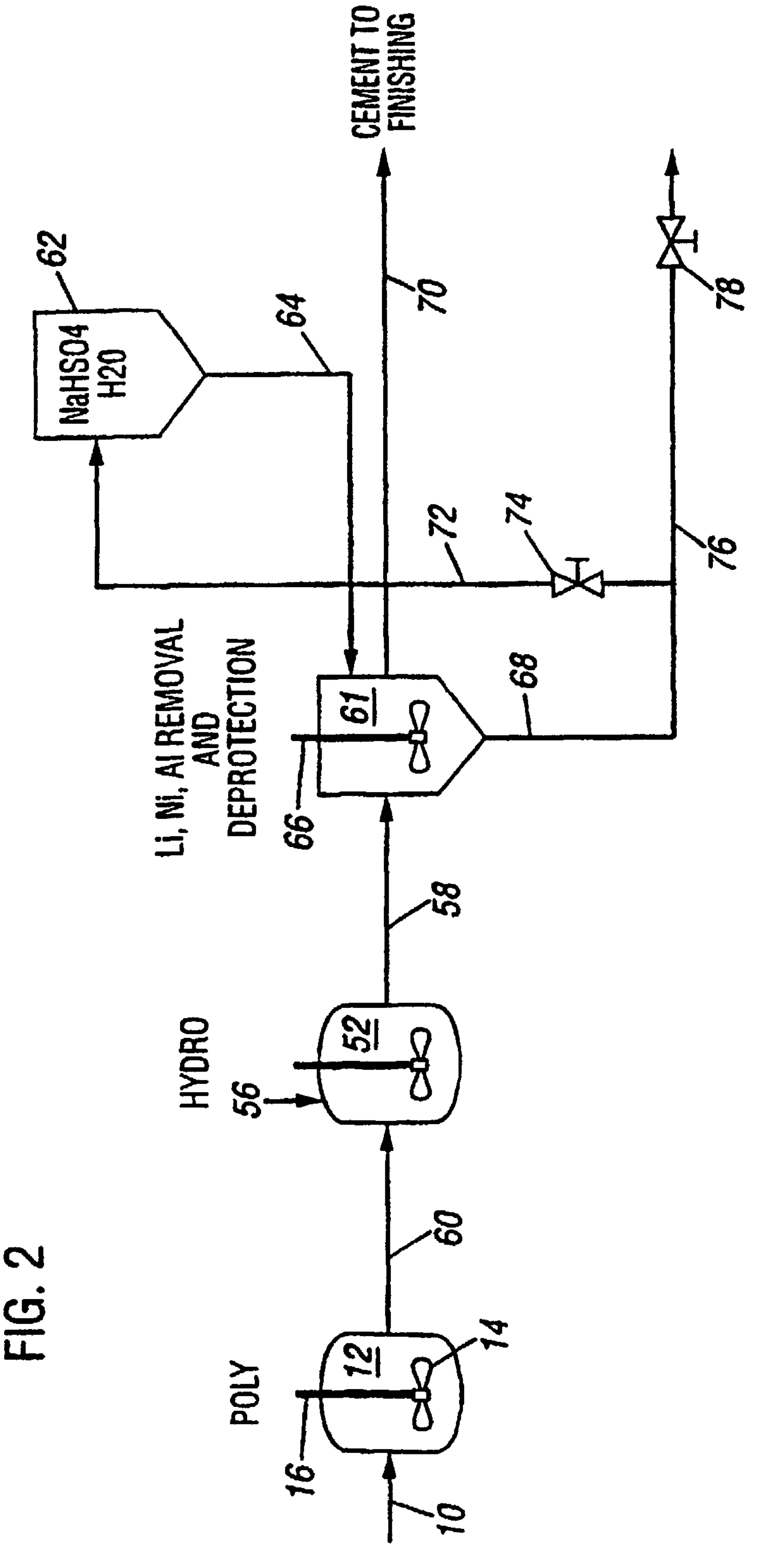
POLY
HYDRO
Li, Ni, Al REMOVAL
AND
DEPROTECTION
NaHSO4
H20
CEMENT TO
FINISHING
10
12
14
16
52
56
58
60
61
62
64
66
68
70
72
74
76
78